(19) Europäisches Patentamt
European Patent Office
Office européen des brevets

(11) Publication number: **0 305 764 B1**

# (12) EUROPEAN PATENT SPECIFICATION

(45) Date of publication of patent specification: **23.02.94**

(51) Int. Cl.5: **C08F 212/08**, C08L 25/08, C08L 71/12

(21) Application number: **88112783.1**

(22) Date of filing: **05.08.88**

## (54) High molecular weight polystyrene blends with PPE and HIPS.

(30) Priority: **06.08.87 US 82337**
**14.12.87 US 132445**

(43) Date of publication of application:
**08.03.89 Bulletin 89/10**

(45) Publication of the grant of the patent:
**23.02.94 Bulletin 94/08**

(84) Designated Contracting States:
**BE DE ES FR GB IT NL SE**

(56) References cited:
**DE-B- 1 181 912**
**FR-A- 780 184**
**US-A- 4 617 346**

**CHEMICAL ABSTRACTS, vol. 95, no. 26, December 1981, page 37, abstract no. 220802q, Columbus, Ohio, US; & SU-A-857 150 (A.N. BOLOTOV et al.) 23-08-1981**

(73) Proprietor: **GE CHEMICALS, INC.**
**Parkersburg Center**
**5th & Avery Streets**
**Parkersburg, West Virginia 26102(US)**

(72) Inventor: **Myers, Charles Louis**
**654 North Eagle Lane**
**Palatine Illinois 60067(US)**
Inventor: **Place, Ronald Howard**
**Route 1, Box 536**
**Vincent Ohio 45784(US)**
Inventor: **Warren, Renate Ingrid**
**Route 1, Box 38A**
**Coolville Ohio 45723(US)**
Inventor: **Kendall, Ronald**

**deceased(NL)**
Inventor: **Smith, J. O. D.**
**Reigerslaan 13**
**NL-2215 NL Voorhout(NL)**

(74) Representative: **VOSSIUS & PARTNER**
**Postfach 86 07 67**
**D-81634 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 305 764 B1

Rank Xerox (UK) Business Services
(3.10/3.09/3.3.3)

## Description

The present invention relates to blends of high molecular weight polystyrene with polyphenylene ether (PPE), high impact polystyrene (HIPS) and a flame retardant which exhibit improved flammability performance.

Polystyrene resins are well known in the art and are widely used in industry and in consumer products. Polystyrene resin may be used alone or in polymer blends with other thermoplastic polymers to provide the blends with various advantageous properties. Polystyrene resin is advantageous in that it is inert to many chemical compounds and is generally easy to process, particularly under injection molding techniques. Generally, the physical properties of a specific polystyrene polymer are dependent on the method by which the polystyrene polymer is formed.

For example, the Wright U.S. patent No. 3,259,595 discloses polystyrene compositions which are formed by suspension polymerization techniques and which are particularly suitable for expanding to produce a plastic film having a closed cellular structure. Similarly, the Ingram et al U.S. patent No. 4,029,869 discloses a method for preparing polystyrene by peroxide-initiated suspension polymerization to provide a polymer product having a broader molecular weight distribution. The suspension polymerization is carried out in the presence of a small amount of a modifying comonomer. The Mace et al U.S. patent No. 3,817,965 also discloses the aqueous suspension polymerization of vinyl compounds such as styrene. Mace et al disclose that by carefully controlling the polymerization temperature, high molecular weight polymers exhibiting viscosities of about 9 to about 50 centistokes may be produced.

Additionally, the Pilato et al U.S. patent No. 3,645,959 discloses the preparation of high molecular weight vinyl polymers such as polystyrene in non-aqueous dispersions using up to about 1 percent of a diene compound such as norbornadiene. The Gunsher et al U.S. patent No. 4,112,209 discloses processes for making polystyrene having a weight average molecular weight Mw between about 200 and about 50,000 and a Mw/Mn ratio of less than about 8 (Mn = number molecular weight) by cationically polymerizing styrene monomer under substantially isothermal conditions in an organic solvent. Highly crystalline isotactic polystyrene polymers having molecular weights less than 1 million may be prepared by the thermal degradation in air of high molecular weight, highly crystalline copolymers of styrene with an alpa-olefin as disclosed in the Hulse et al U.S. patent No. 3,700,639. The Natta et al U.S. patent No. 3,435,018 also disclose the production of isotactic polymers of styrene. Specifically, Natta et al disclose the polymerization of monomeric styrene in a heptane solution containing triethyl aluminum catalyst.

As evidenced by the preceding discussion, various methods are known for producing polystyrene resins exhibiting specific physical properties.

Polyphenylene ether resins are also known in the art and exhibit a desirable combination of chemical, physical and electrical properties over a temperature range of more than about 650 °F (343,3 °C), extending from a brittle point of about -275 °F (-170.56 °C) to a heat distortion temperature of about 375 °F (190.56 °C). This combination of properties renders polyphenylene ether resins suitable for a broad range of applications. However, the usefulness of polyphenylene ether resins is limited in some applications as a consequence of processability, impact resistance, and chemical resistance.

As a result, polyphenylene ether resins have been blended with other polymer resins in order to improve processibility, impact resistance and chemical resistance. For example, the Cizek U.S. patent No. 3,383,435 discloses blends of polyphenylene ether and one or more styrene resins having improved properties. Additionally, the Lee U.S. patent No. 3,819,761 discloses compositions comprising a polyphenylene ether and a rubber modified polystyrene resin, which compositions provide molded articles exhibiting improvements in impact resistance, surface appearance and solvent resistance. Similarly, the Lee, Jr. U.S. patent No. 3,835,200 discloses compositions including a polyphenylene ether, a rubber styrene graft copolymer and a block copolymer of a vinyl aromatic compound and a conjugated diene, which compositions may be used to form molded articles having improved toughness without impairing the gloss or surface appearance of the articles. The Katchman U.S. patent No. 3,960,808 discloses polyphenylene ether compositions including a rubber-modified high impact styrene resin and a homopolystyrene having a number average molecular weight between 30,000 and 60,000. These compositions are disclosed as having improved surface appearance and a reduced melt viscosity which facilitates the fabrication of molded articles having complex configurations and permits the use of faster molding cycles. Similarly, the Katchman et al U.S. patent No. 3,994,856 discloses compositions including a polyphenylene ether, a high impact rubber modified polystyrene resin or a blend of a high impact rubber modified polystyrene resin and a homopolystyrene resin, and an elastomeric block copolymer of a vinyl aromatic compound and a conjugated diene. These compositions are disclosed as having improved impact strengths and improved resistance to attack by aggressive solvents such as gasoline.

Additionally, the Sonoda U.S. patent No. 4,617,346, the Sugio et al U.S. patent No. 4,590,239 and the Yonemitsu et al U.S. patent No. 3,887,646 disclose polyphenylene ether resin compositions including rubber modified styrene polymers for improving impact resistance, heat resistance and the like. Additional polyphenylene ether and polystyrene resin blends are disclosed in the Izawa et al U.S. patent No. 3,929,931, the Haaf U.S. patent No. 4,322,507, the Kuribayashi et al U.S. patent No. 4,543,391 and the Ueda et al U.S. patent No. 4,599,380.

US-A-4,350,793 relates to a flame-retardant composition comprising a polyphenylene ether and a polystyrene resin in a weight ratio of between 4:1 to 1:4 in admixture with an aromatic thermoplastic polyphonate having a number average molecular weight of 4,000 to 80,000, said thermoplastic polyphosphonate being present in an amount of 1 to 20 parts by weight per 100 parts by weight of the total mixture.

One limitation which has been experienced in polyphenylene ether-polystyrene polymer blends is that their flame retardant properties are insufficient. Particularly, many polyphenylene ether-polystyrene blends cannot pass flammability tests such as the oxygen index (ASTM D 2863-87), UL 94 V or the UL 94 5V tests (Underwriters Laboratories, USA-American National Standard tests ANSI/UL-84-1985 tests No. 3. and 4. -"Tests for Flammability of Plastic Material" - Reprinted May 7, 1985), because of material dripping. The UL tests are standard tests procedures of the aformentioned Underwriters Laboratories. The poor flammability performance of such polyphenylene ether-polystyrene blends prevents the use of such blends in applications which require improved flammability performance. Thus, a need exists for polyphenylene ether-polystyrene blends which exhibit improved flammability performance.

It is an object of the present invention to provide polymer blend compositions comprising a polyphenylene ether resin and a high impact polystyrene resin. It is an additional object of the invention to provide polyphenylene ether-high impact polystyrene polymer blends which exhibit improved flammability performance over known polyphenylene ether-high impact polystyrene blends. Another object of the present invention is to provide polyphenylene ether-high impact polystyrene polymer blends which are flame retardant. A specific object of the present invention is to provide polyphenylene ether-high impact polystyrene polymer blends which exhibit improved flammability performance as measured by, for example, the oxygen index, UL 94 V and/or UL 94 5V tests.

These and additional objects are provided by the present invention. The high molecular weight polystyrene used in the present invention is obtainable by a method, which comprises polymerizing styrene monomer and a small amount of a polyfunctional monomer in an emulsion polymerization medium. Generally, the polyfunctional monomer is used in an amount of from about 0.01 to about 2.0 parts by weight per 100 parts by weight total monomer. The monomers which are polymerized to form the high molecular weight polystyrene may consist essentially of styrene monomer and the polyfunctional monomer. The high molecular weight polystyrene which is used has a weight average molecular weight greater than about 400,000 and a broad molecular weight distribution, for example, a Mw/Mn ratio greater than about 6. The high molecular weight polystyrenes are suitable for use as an additive in polyphenylene ether-high impact polystyrene blends for providing the blends with improved flammability performance.

Polymer blend compositions according to the present invention comprise a polyphenylene ether resin, a high impact polystyrene resin, a flame retardant, and a high molecular weight polystyrene resin having a weight average molecular weight, Mw, greater than about 400,000. In accordance with the present invention, it has been discovered that the flammability performance of polyphenylene ether-high impact polystyrene polymer blends may be significantly improved by further including a high molecular weight polystyrene resin having a weight average molecular weight, Mw, greater than about 400,000. Inclusion of the high molecular weight polystyrene resin having a weight average molecular weight, Mw, greater than about 400,000 provides improved flammability performance to polyphenylene ether-high impact polystyrene polymer blends already including a conventional flame retardant. The high molecular weight polystyrene resin is included in the compositions in an amount sufficient to provide improved flammability performance. Preferably, the high molecular weight polystyrene is included in an amount less than the amount in which the high impact polystyrene resin is included in order to retain the advantageous impact properties of the blends.

These and additional objects and advantages according to the product of the present invention will be more fully understood in view of the following detailed description.

The blends of the present invention comprise a high molecular weight polystyrene product. Preferably, the polystyrene product has a weight average molecular weight, Mw, greater than about 400,000, and most preferably greater than about 500,000. Additionally, the molecular weight distribution of the high molecular weight polystyrenes, Mw/Mn, is relatively large, for example, greater than about 6 and in preferred embodiments greater than about 10.

In addition to the conventional uses known for high molecular weight polystyrenes, the high molecular weight polystyrene is particularly adapted for use in the polymer blend compositions of the invention. The blends comprise polyphenylene ether-high impact polystyrene blends, which exhibit improved flammability performance. More specifically, the addition of small amounts of high molecular weight polystyrenes to blends such as polyphenylene ether-high impact polystyrene blends provides the blends with improved flammability performance, for example, as demonstrated by the Underwriters Laboratory UL 94 5V tests.

More particularly, it has now been discovered that the addition of a small amount of a high molecular weight polymer to a polymer blend composition improves the flammability performance of the blend compositions. More particularly, the polymer blend compositions according to the present invention having improved flammability performance comprise a polyphenylene ether resin, a high impact polystyrene resin, a flame retardant and a high molecular weight polystyrene resin having a weight average molecular weight, Mw, greater than about 400,000.

Polyphenylene ether resins adapted for use in the polymer blend compositions of the present invention comprise polymers and copolymers having repeating structural units of the following general formula:

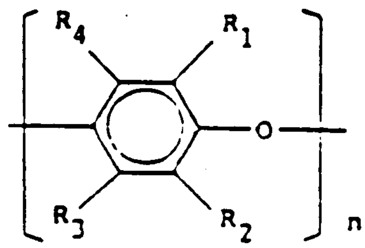

wherein $R_1$, $R_2$, $R_3$, and $R_4$ each individually represent a monovalent substituent such as hydrogen, halogen, alkyl, aryl, alkoxy and other hydrocarbon groups, and n represents the degree of polymerization. Preferably, n is at least 20, and more preferably, n is at least 50.

The polyphenylene ether resins suitable for use in the polymer blend compositions of the present invention are well known in the art and may be prepared by any of a number of processes known in the art from corresponding phenols or reactive derivatives thereof. Examples of polyphenylene ether resins and methods for their production are set forth in the Hay U.S. patents Nos. 3,306,874 and 3,306,875 and in the Stamatoff U.S. patents Nos. 3,257,357 and 3,257,358. Throughout the Specification and Claims the term "polyphenylene ether" includes unsubstituted polyphenylene ether, substituted polyphenylene ether and polyphenylene ether copolymers.

Preferred polyphenylene ether resins adapted for use in the polymer blend compositions of the present invention include, poly(2,6-dimethyl-1,4-phenylene)ether; poly(2,6-diethyl-1,4-phenylene)ether; poly(2-methyl-6-ethyl-1,4-phenylene)ether; poly(2-methyl-6-propyl-1,4-phenylene)ether; poly(2,6-dipropyl-1,4-phenylene)ether; poly(2-ethyl-6-propyl-1,4-phenylene)ether; poly(2,6-dilauryl-1,4-phenylene)ether; poly(2,6-diphenyl-1,4-phenylene)ether; poly(2,6-dimethoxy-1,4-phenylene)ether; poly(2,6-diethoxy-1,4-phenylene)-ether; poly(2-methoxy-6-ethoxy-1,4-phenylene)ether; poly(2-ethyl-6-stearyloxy-1,4-phenylene)ether; poly(2,6-dichloro-1,4-phenylene)ether; poly(2-methyl-6-phenyl-1,4-phenylene)ether; poly(2,6-dibenzyl-1,4-phenylene)-ether; poly(2-ethoxy-1,4-phenylene)ether; poly(2-chloro-1,4-phenylene)ether or poly(2,6-dibromo-1,4-phenylene)ether.

The high impact polystyrene resin which is included in the polymer blend compositions according to the present invention comprises a combination of polystyrene and an impact modifier. Specifically, the high impact polystyrene comprises polymer units derived from a styrene monomer having the following formula:

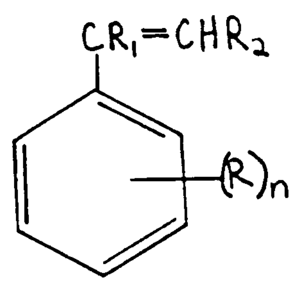

wherein $R_1$ and $R_2$ are selected from the group consisting of lower alkyl or alkenyl groups of from, for example, 1 to 6 carbon atoms and hydrogen, each R is selected from halogen, hydrogen and lower alkyl or alkenyl groups of from, for example, 1 to 6 carbon atoms, and n is an integer of from 0 to 5. Throughout the specification and claims the term "polystyrene resin" includes unsubstituted polystyrene, substituted polystyrene and polystyrene copolymer resins. For example, suitable polystyrene resins include, but are not limited to, homopolymers of polystyrene, polychlorostyrene or polymethylstyrene, and styrene-containing copolymers such as styrene-acrylonitrile copolymers, copolymers of ethyl vinyl benzene and divinyl benzene or styrene-acrylonitrile-methylstyrene terpolymers. The methods for preparing these polystyrenes are well known in the art. The polystyrene resin which makes up the high impact polystyrene resin generally has a weight average molecular weight, Mw, of about 250,000 or less.

The impact modifier included in the high impact polystyrene resins according to the present invention serves to improve the impact properties of the blends. Impact modifiers are well known in the art and generally comprise rubber or elastomer compounds. Both natural and synthetic rubber and elastomeric compounds are suitable for use in the high impact polystyrene resin of the present invention. Preferred impact modifiers include homopolymers or copolymers of one or more monomers such as butadiene, isoprene and ethylene-propylene diene monomers. Suitable impact modifiers for use in the present invention include, hydroxy- and carboxy-terminated polybutadienes, poly-chlorobutadienes, copolymers of dienes such as butadiene and isoprene with various comonomers such as alkyl unsaturated esters, for example methylmethacrylate, unsaturated ketones, for example methylisopropenyl ketone or vinyl heterocyclics, for example vinyl pyridine. Other impact modifiers known in the art may also be used according to the present invention.

Preferably, the impact modifier and the polystyrene resin which are combined to form the high impact polystyrene resin included in the polymer blend compositions of the present invention are combined prior to mixing with the other composition ingredients. Additionally, the polystyrene resin and the impact modifier are preferably combined in a ratio of at least 3:1 by weight to form the high impact polystyrene resin which is then blended with the polyphenylene ether and the remaining composition ingredients.

The flame retardant which is included in the polymer blend compositions of the present invention may comprise many of the flame retardants which are well known in the art for polymer systems. Suitable flame retardants include triaryl phosphates such as triphenyl phosphate and isopropyl triphenyl phosphate, and brominated aromatic compounds such as decabromobiphenyl, pentabromophenyl, pentabromotoluene, hexabromobenzene, decabromodiphenyl carbonate and tetrabromophthalic anhydride.

The high molecular weight polystyrene resin which is included in the polymer blend compositions of the present invention has a weight average molecular weight, Mw, greater than about 400,000. The high molecular weight polystyrene resin provides the polymer blend compositions with improved flammability performance. Specifically, the high molecular weight polystyrene resin improves the performance of polyphenylene ether-high impact polystyrene polymer blend compositions in the oxygen index, UL 94 V and/or UL 94 5V tests. In a preferred embodiment, the high molecular weight polystyrene resin has a weight average molecular weight, Mw, greater than 600,000. The high molecular weight polystyrene resin may be linear or branched. At least a small degree of branching may improve certain properties of the compositions, for example, viscosity, and may reduce the amount of high molecular weight polystyrene required to provide improved flammability performance in a blend composition. Additionally, the high molecular weight polystyrene resin preferably comprises a polystyrene homopolymer or a polystyrene copolymer formed from less than 10 weight percent, and more preferably less than 5 weight percent, of a non-styrene monomer. The non-styrene monomer generally comprises a functional monomer which provides the high molecular weight polystyrene with a degree of branching structure.

The amounts of polyphenylene ether resin, high impact polystyrene resin, flame retardant and high molecular weight polystyrene resin included in the polymer blend compositions of the present invention may be varied depending on the specific nature of the high molecular weight polystyrene resin and on the end use of the polymer blend composition. The high molecular weight polystyrene resin is included in an amount sufficient to provide the blends with improved flammability performance. As will be apparent to one skilled in the art, flammability performance may be measured in various manners, including, for example, the oxygen index, UL 94 V and UL 94 5V tests. The high molecular weight polystyrene resin is preferably included in the blends in an amount less than the amount in which the high impact polystyrene resin is included. It is preferred that the high impact polystyrene is included in a greater amount than the high molecular weight polystyrene in order to retain the advantageous properties of the polyphenylene-polystyrene blends. Generally, the high molecular weight polystyrene resin is included at least in an amount of about one weight percent in order to provide the polymer blend composition with the improved flammability performance. Moreover, no more than about 10 weight percent of the high molecular weight

polystyrene is usually required in the blends in order to provide improvements in flammability performance. Preferred amounts of the high molecular weight polystyrene are from 3 to 8 weight percent. It is believed that relatively lower amounts of the high molecular weight polystyrene may be used if the high molecular weight polystyrene comprises at least a small degree of branching, while, if the high molecular weight polystyrene is linear, relatively greater amounts may be necessary to provide the improved flammability performance.

The polymer blend compositions according to the present invention also preferably comprise from 5 to 90 weight percent of the polyphenylene ether resin, from 5 to 90 weight percent of the high impact polystyrene resin, and from 0.1 to 30 weight percent of the flame retardant. In additionally preferred embodiments, the polymer blend compositions according to the present invention comprise from 25 to 70 weight percent of the polyphenylene ether resin, from 25 to 70 weight percent of the high impact polystyrene resin, from 1 to 20 weight percent of the flame retardant and from 3 to 8 weight percent of the high molecular weight polystyrene resin.

The method of forming the polymer blend composition is not critical and prior art blending techniques are suitable. As set forth above, a preferred method comprises first blending the polystyrene resin and the impact modifier and then blending the resultant high impact polystyrene resin with the polyphenylene ether and other components included in the polymer blend composition.

Additionally, conventional amounts of conventional additives for processibility, stability and the like may be included in the polymer blend compositions of the present invention. Fillers and/or reinforcing fillers may also be included in the polymer blend compositions, examples of which include powders, beads, whiskers, fibers or platelets, of metals, for example aluminum, bronze, iron and nickel, and/or nonmetals, for example carbon, calcium silicate, asbestos, titanium dioxide, talc, clay, glass flakes, glass fibers and the like.

The following Examples are provided to illustrate specific embodiments of the present invention.

The Examples 1 and 2 as well as the runs B and C of Example 5 are not embodiments of the present invention and serve only the purpose of comparison.

EXAMPLE 1

A high molecular weight polystyrene resin was prepared according to the method of the present invention as follows. An aqueous phase comprising 120 parts by weight demineralized water and 3 parts by weight of a sodium alkyl benzene sulfonate surfactant were charged to a reactor, stirred and heated to a temperature of about 60 °C. The pH of this aqueous phase was adjusted to approximately 6.5. Ten percent of a first mixture comprising 99.6 parts by weight styrene monomer, 0.4 parts by weight allyl methacrylate monomer and 0.3 parts by weight cumene hydroperoxide, and 10 percent of a second mixture comprising 10 parts by weight demineralized water, 0.35 parts by weight of a reducing agent (sodium formaldehyde sulfoxylate), 0.005 parts by weight of a chelating agent (sodium EDTA) and 0.001 parts by weight of an iron salt ($FeSO_4$ $7H_2O$) were then added to the reactor. The remainder of the first mixture was then added to the reactor over a 90 minute period while the remainder of the second mixture was added to the reactor over a 100 minute period. The polymerization reaction proceeded in the resultant emulsion polymerization medium for a period of about one hour while the reaction temperature was maintained at about 60 °C. The steam distilled volatiles of the final medium were tested in order to determine the residual amount of monomer remaining in the final medium. The total steam distilled volatiles were approximately 2.5 percent. Additionally, the total solids (polystyrene polymer) of the final medium comprised approximately 42.7 percent, and a 96.1 percent monomer conversion was determined. The molecular weight of the final polystyrene product was determined using high pressure liquid chromatography methods, the results of which are set forth in Table 1.

EXAMPLE 2

High molecular weight polystyrene resins were prepared according to the procedures set forth in Example 1 except that the initial aqueous phase comprised 170 parts by weight demineralized water rather than the 120 parts by weight used in the procedure of Example 1. Additionally, the amount of the polyfunctional monomer which was used in the process was varied and the type of polyfunctional monomer used in the process comprised allyl methacrylate or divinyl benzene. The amount and type of polyfunctional monomer used in preparing compositions 2A-2D according to the present invention in this Example are set forth in Table 1. Also set forth in Table 1 are the adjusted pH of the aqueous phase used to prepare each composition of this Example, the percent of steam distilled volatiles and total solids in the final medium of each composition prepared in this Example and the monomer conversion of each composition prepared in

this Example.

TABLE 1

| Composition | 1 | 2A | 2B | 2C | 2D |
|---|---|---|---|---|---|
| Styrene Monomer, parts by weight | 99.6 | 99.6 | 99.6 | 99.6 | 99.6 |
| Polyfunctional Monomer, parts by weight | | | | | |
| Allyl methacrylate | 0.4 | 0.4 | --- | --- | --- |
| Divinyl benzene | --- | --- | 0.1 | 0.2 | 0.3 |
| Adjusted pH, aqueous phase | 6.5 | 6.5 | 6.4 | 6.5 | 6.8 |
| Final Medium | | | | | |
| Steam Distilled Volatiles,% | 2.5 | 1.8 | 0.9 | 1.0 | 1.0 |
| Total Solids,% | 42.7 | 34.1 | 35.4 | 35.3 | 35.4 |
| Monomer Conversion,% | 96.1 | 93.1 | 96.5 | 96.7 | 97.0 |
| Molecular Weight | | | | | |
| Mw, x 1000 | 653 | 924 | 845 | 396 | 652 |
| Mn, x 1000 | 48 | 65 | 57 | 33 | 45 |
| Mw/Mn | 13.7 | 14.3 | 14.9 | 12.0 | 14.4 |
| Z avg Mw, x 1000 | 1778 | 1960 | 1686 | 1029 | 1396 |
| Z+1 avg Mw, x 1000 | 2282 | 2358 | 1917 | 1322 | 2189 |

The results set forth in Table 1 demonstrate that the used method provides high monomer conversion and produces high molecular weight polystyrene resins exhibiting high weight average molecular weights and broad molecular weight distributions.

EXAMPLE 3

The high molecular weight polystyrene resins prepared in Examples 1 and 2 were used as additives in polyphenylene ether-high impact polystyrene resin blends to provide the blends with improved flammability performance, particularly as measured by the Underwriters Laboratory UL 94 5V test. The polymer blend compositions which were tested included approximately 40 to 45 weight percent polyphenylene ether resin, approximately 40 to 45 weight percent high impact polystyrene resin, approximately 10 percent of a flame retardant, and a high molecular weight polystyrene resin produced according to the method of the present invention. The amount of high molecular weight polystyrene resin used in each composition is set forth in Table 2. The UL 94 5V test is a standard test procedure of the Underwriters Laboratory wherein a sample is ignited 5 times in order to assess its flammability performance. Injected molded samples having a thickness of 3.3 mm (0.125 inches) were used. If a sample resists dripping during the testing procedure, it is assessed a pass rating. As set forth in Table 2, the blend compositions including a high molecular weight polystyrene produced according to the present invention all passed the UL 94 5V test procedure. For comparison, a similar polymer blend composition not including a high molecular weight polystyrene resin according to the present invention was also subjected to the UL 94 5V testing procedure. As indicated in Table 2, this comparative blend composition did not pass the UL 94 5V procedure.

TABLE 2

| High Molecular Weight Polystyrene Composition | Amount in Blend, wt % | UL 94 5V, Pass |
|---|---|---|
| 1 | 5 | YES |
| 2A | 5 | YES |
| 2B | 3 | YES |
| 2C | 3 | YES |
| 2D | 3 | YES |
| Comparative Example | --- | NO |

EXAMPLE 4

The general procedures set forth in Example 2 were followed in order to produce additional high molecular weight polystyrenes 4A-4E. In this Example, the polyfunctional monomer included in the polymerization method comprised diallyl maleate and the amount of polyfunctional monomer included in the polymerization was varied. Table 3 sets forth the amount of polyfunctional monomer included in each of compositions 4A-4E prepared according to this Example. Table 3 also sets forth various reaction parameters and the molecular weights of the resultant polystyrene resins.

TABLE 3

| Composition | 4A | 4B | 4C | 4D | 4E |
|---|---|---|---|---|---|
| Styrene Monomer, parts by weight | 99.6 | 99.6 | 99.6 | 99.6 | 99.6 |
| Polyfunctional Monomer, parts by weight | 0.2 | 0.4 | 0.6 | 0.8 | 1.0 |
| Adjusted pH, aqueous phase | 6.6 | 6.5 | 6.3 | 6.3 | 6.3 |
| Final Medium | | | | | |
| Steam Distilled Volatiles,% | 1.1 | 1.0 | 1.0 | 0.8 | 0.8 |
| Total Solids,% | 34.9 | 35.5 | 35.5 | 35.8 | 35.0 |
| Monomer Conversion,% | 95.6 | 97.3 | 97.0 | 97.7 | 95.0 |
| Molecular Weight | | | | | |
| Mw, x 1000 | 400 | 541 | 926 | 960 | 797 |
| Mn, x 1000 | 58 | 62 | 62 | 57 | 46 |
| Mw/Mn | 6.9 | 8.7 | 14.9 | 16.8 | 17.1 |
| Z avg Mw, x 1000 | 1153 | 1313 | 2211 | 2058 | 1905 |
| Z+1 avg Mw, x 1000 | 2652 | 1876 | 2748 | 2410 | 2392 |

The results set forth in Table 3 demonstrate that the produced high molecular weight polystyrenes have high weight average molecular weights and broad molecular weight distributions as evidenced by the ratio Mw/Mn.

EXAMPLE 5

In accordance with the present invention, polymer blend compositions were prepared including a polyphenylene ether resin, a high impact polystyrene resin, a flame retardant and a high molecular weight polystyrene. The amounts, in weight percents, of the components included in the compositions are set forth in Table 4. The flame retardant included in the compositions of this Example comprised triphenyl phosphate. The high molecular weight polystyrene comprised a commercially available, linear high molecular weight polystyrene, Celukavit® S supplied by C.D.F. Chimie, having a weight average molecular weight, Mw, of approximately 6 x $10^6$. The compositions of this Example further included approximately 1.4 total weight percent of additional additives comprising a butyl hydroxy toluene antioxidant, an ethylene oxide/propylene oxide copolymer lubricant and an octyldiphenyl phosphite stabilizer. As set forth in Table 4, composition A did not include any of the high molecular weight polystyrene resin while compositions B-F included increasing amounts of the high molecular weight polystyrene resin, respectively. Injection molded bars of the compositions were subjected to the UL 94 5V and oxygen index tests in order to determine flammability performance. In this and the following examples the UL tests were conducted according to the standards of Underwriters Laboratory. The oxygen index test was performed according to ASTM D-2863. Various physical properties of the compositions were also measured including the Notched Izod Impact Strength according to ASTM D-256, method A, the Mobay Viscosity according to a method substantially similar to ASTM D-3835 at 550°F (287.8°C) and the tensile properties according to ASTM D-639. The results of these tests and measurements are also set forth in Table 4. In the UL 94 5V tests set forth in Table 4, F-5 indicates that the sample failed the test during the fifth ignition, that is, the sample dripped during the fifth ignition. Compositions B-F show improved flammability performance as measured by the oxygen index test, while compositions D-F also exhibited improved flammability performance as measured by the UL 94 5V test. The results set forth in Table 4 further indicate that the physical properties of the polymer blend compositions of the present invention, for example notched Izod impact strength, viscosity and tensile strength, modulus and elongation, were not unreasonably affected by the inclusion of the high molecular weight polystyrene resin in the compositions as compared with the Comparative Composition A.

Table 4

| Component, wt% | A | B | C | D | E | F |
|---|---|---|---|---|---|---|
| Polyphenylene Ether | 41.6 | 41.6 | 41.6 | 41.6 | 41.6 | 41.6 |
| High Impact Polystyrene Resin | 41.6 | 39.1 | 38.3 | 37.5 | 36.6 | 35.0 |
| Flame Retardant | 15.4 | 15.4 | 15.4 | 15.4 | 15.4 | 15.4 |
| High Molecular Weight Polystyrene | -- | 2.5 | 3.3 | 4.1 | 5.0 | 6.6 |
| Additives | 1.4 | 1.4 | 1.4 | 1.4 | 1.4 | 1.4 |
| UL 94 5V (0.125" thick) (3.175 mm) | F-5 | F-5 | F-5 | PASS | PASS | PASS |
| IZOD IMPACT STRENGTH, ft-lbs/in (0.305m - 454g/2.54cm) | 8.4 | 8.2 | 8.0 | 8.2 | 7.4 | 7.5 |
| SPECIFIC GRAVITY | 1.099 | 1.100 | 1.100 | 1.100 | 1.101 | 1.101 |
| OXYGEN INDEX (%) | 28.5 | 30.0 | 31.0 | 31.5 | 31.5 | 33.0 |
| MOBAY VISCOSITY, (550°F) (287.8°C) 100 SEC.-1 | 3745 | 4123 | 4062 | 4056 | 4372 | 4448 |
| 500 SEC.-1 | 1772 | 1997 | 2003 | 2008 | 2138 | 2218 |
| 1000 SEC.-1 | 1284 | 1461 | 1477 | 1483 | 1572 | 1644 |
| TENSILE ST., (PSI) MPa | (5555) 38.30 | (5823) 40.15 | (5940) 40.95 | (5850) 40.33 | (6250) 43.09 | (6090) 41.99 |
| MOD., ($PSI \times 10^5$) $kPa \times 10^5$ | (3.5) 24.13 | (3.5) 24.13 | (3.6) 24.82 | (3.3) 22.75 | (3.4) 23.44 | (3.5) 24.13 |
| ELONG., % | 62 | 59 | 62 | 70 | 60 | 59 |

EXAMPLE 6

Polymer blend compositions were prepared comprising a polyphenylene ether, a high impact polystyrene resin, a flame retardant and a high molecular weight polystyrene resin in a manner similar to that set forth in Example 5. The amounts of the components, in weight percents, are indicated in Table 5. The flame retardant included in the polymer blend compositions comprised triphenyl phosphate. The high molecular weight polystyrene comprised the linear Celukavit S set forth in Example 5. Compositions A and B did not include a high molecular weight polystyrene resin in accordance with the present invention. Composition A

of this Example also included approximately 2 total weight percent of additives comprising a butyl hydroxy toluene antioxidant, an ethylene oxide/propylene oxide copolymer lubricant, and an octyldiphenyl phosphite stabilizer as described in Example 5 and a substituted hydroxyphenyl benzotriazol UV stabilizer. Compositions B-D included approximately 2.5 total weight percent of additives comprising the aforementioned antioxidant, lubricant and phosphite stabilizer. Injection molded bars of these compositions were subjected to the UL 94 5V test and other tests for measuring physical properties as set forth in Example 5. The compositions were also subjected to the heat distortion temperature test according to ASTM D-696. The results of these tests are set forth in Table 5. Composition D relating to a preferred composition of the present invention including greater than 3 percent by weight of the high molecular weight linear polystyrene successfully passed the UL 94 5V test. Additionally, the physical properties of composition D were not adversely affected by the inclusion of the high molecular weight polystyrene.

TABLE 5

| Component, wt% | | A | B | C | D |
|---|---|---|---|---|---|
| Polyphenylene Ether | | 32.3 | 32.2 | 32.2 | 32.2 |
| High Impact Polystyrene Resin | | 52.8 | 52.5 | 50.0 | 48.3 |
| Flame Retardant | | 12.8 | 12.7 | 12.7 | 12.7 |
| High Molecular Weight Polystyrene | | -- | -- | 2.5 | 4.2 |
| Additives | | 2.1 | 2.6 | 2.6 | 2.6 |
| UL 94 5V (0.125" thick) (3.175 mm) | | F-5 | F-5 | F-5 | PASS |
| IZOD IMPACT STRENGTH, ft-lbs/in (0.305m-454g/2.54cm) | | 4.0 | 4.2 | 3.8 | 3.9 |
| HDT, °F | | 155 | 154 | 156 | 156 |
| °C | | 68.33 | 67.78 | 68.89 | 68.89 |
| MOBAY VISCOSITY, (550°F) (287.8°C) | 100 SEC.-1<br>500 SEC.-1<br>1000 SEC.-1 | 3156<br>1484<br>1072 | 3132<br>1478<br>1070 | 3666<br>1668<br>1188 | 3227<br>1607<br>1191 |
| TENSILE ST., (PSI)MPa | | (5460)37.64 | (5180)35.71 | (5180)35.71 | (5430)37.44 |
| MOD., ($PSIx10^5$)$kPax10^5$ | | (3.5)24.13 | (3.6)24.82 | (3.5)24.13 | (3.4)23.44 |
| ELONG., % | | 40 | 37 | 37 | 51 |

EXAMPLE 7

Polymer blend compositions according to the present invention were prepared, the components of which are set forth in weight percent in Table 6. Composition A of this Example did not include a high molecular weight polystyrene. The flame retardant comprised triphenyl phosphate while the high molecular weight polystyrene comprised the linear Celukavit® S. Compositions A-C all included approximately 1 total weight percent of the aforementioned antioxidant, lubricant and phosphite stabilizer. Injection molded bars of the polymer blend compositions were subjected to the UL 94 5V test and to measurements of the notched Izod impact, Mobay viscosity and tensile strength, modulus and elongation as set forth in Example 5, the results of which are set forth in Table 6. The results in Table 6 also indicate that the physical properties of composition C were not adversely affected by the high molecular weight polystyrene resin.

TABLE 6

| Component, wt % | | A | B | C |
|---|---|---|---|---|
| Polyphenylene Ether | | 41.8 | 41.8 | 41.8 |
| High Impact Polystyrene Resin | | 47.1 | 44.4 | 42.7 |
| Flame Retardant | | 9.8 | 9.8 | 9.8 |
| High Molecular Weight Polystyrene | | -- | 2.7 | 4.4 |
| Additives | | 1.3 | 1.3 | 1.3 |
| UL 94 5V (0.125" thick) (3.175 mm) | | F-4 | F-5 | Pass |
| Burn Time, sec. | | dripped | dripped | 10 |
| IZOD IMPACT STRENGTH, ft-lbs/in (0.305m-454g/2.54cm) | | 5.0 | 5.2 | 5.3 |
| HDT, °F | | 184 | 186 | 190 |
| °C | | 84.44 | 85.56 | 87.78 |
| MOBAY VISCOSITY, (550°F) (287.8°C) | 100 SEC.-1<br>500 SEC.-1<br>1000 SEC.-1 | 5024<br>2450<br>1799 | 5347<br>2536<br>1944 | 5409<br>2667<br>1967 |
| TENSILE ST., (PSI)MPa | | (7415)51.12 | (7695)53.06 | (7850)54.12 |
| MOD., (PSIx$10^5$)kPax$10^5$ | | (3.5)24.13 | (3.5)24.13 | (3.6)24.82 |
| ELONG., % | | 30 | 29 | 31 |

EXAMPLE 8

Polymer blend compositions were prepared in this Example according to the present invention, the amounts of the components of which are set forth in weight percents in Table 7. The flame retardant comprised triphenyl phosphate and the high molecular weight polystyrene comprised the linear Celukavit® S. The compositions also included approximately 1 total weight percent of additives comprising the aforementioned antioxidant, a trinonylphenyl phosphite stabilizer and a magnesium oxide filler. Both solid and foamed samples of the polymer blend compositions were subjected to the UL 94 5V test. The foamed samples were prepared using a polyolefin blowing agent (Nortech 1226 supplied by Enron Chemical Company) and had a 10 percent weight reduction as compared with the solid samples. The results of the UL 94 5V tests are set forth in Table 7. These results indicate that the solid samples of the compositions according to the present invention, B-D, passed the UL 94 5V tests with burn times of 7, 8 and 10 seconds, respectively, while the solid sample of composition A not including the high molecular weight polystyrene failed the UL 94 5V test at the fifth ignition. Additionally, the foamed sample of composition D according to the present invention also passed the UL 94 5V test.

TABLE 7

| Component, wt% | A | B | C | D |
|---|---|---|---|---|
| Polyphenylene Ether | 41.5 | 41.5 | 41.5 | 41.5 |
| High Impact Polystyrene Resin | 45.0 | 42.4 | 40.7 | 38.1 |
| Flame Retardant | 12.5 | 12.5 | 12.5 | 12.5 |
| High Molecular Weight Polystyrene | -- | 2.6 | 4.3 | 6.9 |
| Additives | 1.0 | 1.0 | 1.0 | 1.0 |
| UL 94 5V, SOLID, (0.150" thick)* | F-5 | Pass | Pass | Pass |
| BURN TIME | dripped | 7 | 8 | 10 |
| UL 94 5V, FOAMED, (0.150" thick)* | F-5 | F-5 | F-5 | Pass |
| BURN TIME | dripped | dripped | dripped | 10 |

*0.150" ≙ 3.81 mm

EXAMPLE 9

Polymer blend compositions were prepared in this Example according to the present invention, the components of which are set forth in weight percents in Table 8. The flame retardant included in these compositions comprised triphenyl phosphate. Composition A did not include a high molecular weight polystyrene resin. Compositions B-G included high molecular weight polystyrene resins comprising branched networks. These high molecular weight polystyrene resins were prepared by incorporating small amounts of di- or tri-functional monomers as the polystyrenes were formed. The functional monomer was added continuously at a low level in order to maintain an extremely low level of monomer during polymer synthesis. Compositions B-D included a high molecular weight polystyrene copolymer resin formed from 99.3 percent styrene monomer and 0.7 percent diallyl maleate monomer. The high molecular weight polystyrene formed a gel in THF and toluene solvents so the approximate molecular weight could not be determined by liquid chromatography. Compositions E-G included a high molecular weight polystyrene copolymer resin prepared from 99.9 percent styrene monomer and 0.1 percent divinyl benzene monomer. The high molecular weight polystyrene copolymer resin had a weight average molecular weight, Mw, of approximately 670,000 as measured by liquid chromatography in toluene solution with linear polystyrene standards. The compositions of this Example also included approximately 1 weight percent of the additives set forth in Example 7. Injection molded bars of the compositions of this Example were subjected to the UL 94 5V test and to measurement of various physical properties, the results of which are set forth in Table 8. As may be observed from the results set forth in Table 8, comparative composition A not including a high molecular weight polystyrene did not pass the UL 94 5V test while compositions B-G according to the present invention successfully passed the UL 94 5V tests with burn times ranging from 9 to 14 seconds. The additional results set forth in Table 8 indicate that the physical properties of the compositions according to the present invention were not adversely affected by the high molecular weight polystyrene as compared with the properties of comparative composition A.

Table 8

| Component, wt% | A | B | C | D | E | F | G |
|---|---|---|---|---|---|---|---|
| Polyphenylene Ether | 41.8 | 41.8 | 41.8 | 41.8 | 41.8 | 41.8 | 41.8 |
| High Impact Polystyrene Resin | 47.1 | 45.3 | 44.4 | 43.5 | 44.4 | 43.5 | 42.7 |
| Flame Retardant | 9.8 | 9.8 | 9.8 | 9.8 | 9.8 | 9.8 | 9.8 |
| High Molecular Weight Polystyrene | -- | 1.8 | 2.7 | 3.6 | 2.7 | 3.6 | 4.4 |
| Additives | 1.3 | 1.3 | 1.3 | 1.3 | 1.3 | 1.3 | 1.3 |
| UL 94 5V @.125" thick) ≙ 3.18 mm | F-5 | Pass | Pass | Pass | Pass | Pass | Pass |
| Burn Time, sec. | dripped | 9 | 9 | 9 | 14 | 11 | 10 |
| IZOD IMPACT STRENGTH, ft-lbs/in (0.305m - 454g/2.54cm) | 4.7 | 4.6 | 4.9 | 4.5 | 4.3 | 4.5 | 4.6 |
| MOBAY VISCOSITY, 100 SEC.-1 | 5057 | 5108 | 4599 | 5081 | 4612 | 4875 | 5161 |
| (550°F) 500 SEC.-1 | 2403 | 2542 | 2270 | 2555 | 2269 | 2464 | 2552 |
| (287.8°C) 1000 SEC.-1 | 1744 | 1882 | 1675 | 1900 | 1671 | 1837 | 1884 |
| TENSILE ST., (PSI) MPa | (7945) 54.78 | (7967) 54.93 | (7880) 54.33 | (8250) 56.88 | (7740) 53.37 | (7915) 54.57 | (8135) 56.09 |
| MOD., ($PSIx10^5$) kPa $\times 10^5$ | (3.3) 22.75 | (3.2) 22.06 | (3.4) 23.44 | (3.4) 23.44 | (3.4) 23.44 | (3.4) 23.44 | (3.5) 24.13 |
| ELONG., % | 29 | 29 | 26 | 24 | 30 | 29 | 26 |

EXAMPLE 10

Polymer blend compositions were prepared in this Example according to the present invention, the components of which are set forth by weight percent in Table 9. The flame retardant included in the compositions of this Example comprised triphenyl phosphate. The high molecular weight polystyrene resin comprised a copolymer formed from 99.6 percent styrene monomer and 0.4 percent allyl methacrylate

monomer. The high molecular weight polystyrene copolymer resin had a weight average molecular weight, Mw, of approximately 856,000 as measured by the chromatography techniques described in Example 9. The compositions of this Example also included approximately 1 total weight percent of the aforementioned antioxidant, lubricant and octyldiphenyl phosphite stabilizer. Injection molded bars of these polymer blend compositions were subjected to the UL 94 5V test and to measurements of various physical properties, the results of which are set forth in Table 9. As may be observed from Table 9, the compositions B-D according to the present invention passed the UL 94 5V tests with burn times of from 12 to 14 seconds while comparative composition A not including a high molecular weight polystyrene resin did not pass the UL 94 5V test. The remaining results set forth in Table 9 indicate that the various physical properties measured were not adversely affected by the inclusion of the high molecular weight polystyrene resins.

TABLE 9

| Component, wt% | | A | B | C | D |
|---|---|---|---|---|---|
| Polyphenylene Ether | | 41.8 | 41.8 | 41.8 | 41.8 |
| High Impact Polystyrene Resin | | 47.1 | 44.4 | 43.5 | 42.7 |
| Flame Retardant | | 9.8 | 9.8 | 9.8 | 9.8 |
| High Molecular Weight Polystyrene | | -- | 2.7 | 3.6 | 4.4 |
| Additives | | 1.3 | 1.3 | 1.3 | 1.3 |
| UL 94 5V (0.125" thick) ≙ 3.18 mm | | F-5 | Pass | Pass | Pass |
| Burn Time, sec. | | dripped | 14 | 12 | 13 |
| IZOD IMPACT STRENGTH, ft-lbs/in (0.305m-454g/2.54cm) | | 5.6 | 5.7 | 5.6 | 5.6 |
| HDT, °F | | 184 | 188 | 186 | 190 |
| °C | | 84.44 | 86.67 | 85.56 | 87.78 |
| MOBAY VISCOSITY, (550°F) (287. 8°C) | 100 SEC.-1 | 4914 | 5431 | 5767 | 5651 |
| | 500 SEC.-1 | 2496 | 2721 | 2992 | 2771 |
| | 1000 SEC.-1 | 1964 | 2021 | 3149 | 2038 |
| TENSILE ST., (PSI) MPa | | (7535)51.95 | (8090)55.78 | (8325)57.40 | (8375)57.74 |
| MOD., (PSIx$10^5$) kPax$10^5$ | | (3.5)24.13 | (3.5)24.13 | (3.7)25.51 | (3.6)24.82 |
| ELONG., % | | 32 | 27 | 26 | 27 |

**Claims**

**1.** A polymer blend composition having improved flammability performance comprising:
(a) a polyphenylene ether resin;
(b) a high impact polystyrene resin;
(c) a flame retardant; and
(d) a high molecular weight polystyrene resin having a weight average molecular weight, Mw, greater than about 400,000, said high molecular weight polystyrene resin being included in such amounts that the blend composition passes the flammability test UL 94 5V.

**2.** A polymer blend composition as defined by claim 1, wherein the high molecular weight polystyrene resin is included in an amount less than the amount in which the high impact polystyrene resin is included.

**3.** A polymer blend composition as defined by claim 1, comprising:
(a) from 5 to 90 weight percent of the polyphenylene ether resin;

(b) from 5 to 90 weight percent of the high impact polystyrene resin; and
(c) from 0.1 to 30 weight percent of the flame retardant.

**4.** A polymer blend composition as defined by claim 3, wherein the component (d) is present in a range of 1.8 to 10 weight percent.

**5.** A polymer blend composition as defined by claim 4, wherein the component (d) is present in a range of 3 to 8 weight percent.

**6.** A polymer blend composition as defined by claim 5, comprising:
(a) from 25 to 70 weight percent of the polyphenylene ether resin;
(b) from 25 to 70 weight percent of the high impact polystyrene resin;
(c) from 1 to 20 weight percent of the flame retardant; and
(d) from 3 to 8 weight percent of the high molecular weight polystyrene resin.

**7.** A polymer blend composition as defined by claim 1, wherein the high molecular weight polystyrene resin has a weight average molecular weight greater than 600,000.

**8.** A polymer blend composition as defined by claim 1, wherein the high molecular weight polystyrene resin comprises a branched polystyrene resin.

**9.** A polymer blend composition as defined by claim 8, wherein the high molecular weight polystyrene resin is included in an amount of at least 1 weight percent.

**10.** A polymer blend composition as defined by claim 9, wherein the high molecular weight polystyrene resin is included in an amount no greater than 10 weight percent.

**11.** A polymer blend composition as defined by claim 1, wherein the high molecular weight polystyrene resin comprises a linear polystyrene resin.

**12.** A polymer blend composition as defined by claim 11, wherein the high molecular weight polystyrene resin is included in an amount of at least 3 weight percent.

**13.** A polymer blend composition as defined by claim 1, wherein the high molecular weight polystyrene resin is selected from the group consisting of polystyrene homopolymers and polystyrene copolymers formed from less than 10 weight percent of non-styrene monomer.

**14.** A polymer blend composition as defined by claim 1, wherein the high impact polystyrene resin comprises an elastomeric impact modifier.

**15.** A polymer blend composition as defined by claim 1, wherein the high impact polystyrene resin comprises polystyrene and an impact modifier in a ratio of at least 3:1 by weight.

**16.** A polymer blend composition as defined by claim 1, wherein the flame retardant is selected from the group consisting of triarylphosphates and brominated aromatic compounds.

**Patentansprüche**

**1.** Polymermischungszusammensetzung mit verbessertem Entflammbarkeitsverhalten, umfassend:
(a) ein Polyphenylenetherharz;
(b) ein hochschlagzähes Polystyrolharz;
(c) ein Flammverzögerungsmittel; und
(d) ein Polystyrolharz mit hohem Molekulargewicht mit einem Gewichtsmittelmolekulargewicht $M_w$, das größer als etwa 400 000 ist, wobei das Polystyrolharz mit hohem Molekulargewicht in solchen Mengen enthalten ist, daß die Mischungszusammensetzung die Entflammbarkeitsprüfung UL 94 5V besteht.

2. Polymermischungszusammensetzung nach Anspruch 1, wobei das Polystyrolharz mit hohem Molekulargewicht in einer geringeren Menge als das hochschlagzähe Polystyrolharz enthalten ist.

3. Polymermischungszusammensetzung nach Anspruch 1, umfassend:
   (a) 5 bis 90 Gew.-% des Polyphenylenetherharzes;
   (b) 5 bis 90 Gew.-% des hochschlagzähen Polystyrolharzes; und
   (c) 0,1 bis 30 Gew.-% des Flammverzögerungsmittels.

4. Polymermischungszusammensetzung nach Anspruch 3, wobei die Komponente (d) in einem Bereich von 1,8 bis 10 Gew.% vorliegt.

5. Polymermischungszusammensetzung nach Anspruch 4, wobei die Komponente (d) in einem Bereich von 3 bis 8 Gew.-% vorliegt.

6. Polymermischungszusammensetzung nach Anspruch 5, umfassend:
   (a) 25 bis 70 Gew.-% des Polyphenylenetherharzes;
   (b) 25 bis 70 Gew.-% des hochschlagzähen Polystyrolharzes;
   (c) 1 bis 20 Gew.-% des Flammverzögerungsmittels; und
   (d) 3 bis 8 Gew.-% des Polystyrolharzes mit hohem Molekulargewicht.

7. Polymermischungszusammensetzung nach Anspruch 1, wobei das Polystyrolharz mit hohem Molekulargewicht ein größeres Gewichtsmittelmolekulargewicht als 600 000 aufweist.

8. Polymermischungszusammensetzung nach Anspruch 1, wobei das Polystyrolharz mit hohem Molekulargewicht ein verzweigtes Polystyrolharz umfaßt.

9. Polymermischungszusammensetzung nach Anspruch 8, wobei das Polystyrolharz mit hohem Molekulargewicht in einer Menge von wenigstens 1 Gew.-% enthalten ist.

10. Polymermischungszusammensetzung nach Anspruch 9, wobei das Polystyrolharz mit hohem Molekulargewicht in einer nicht größeren Menge als 10 Gew.-% enthalten ist.

11. Polymermischungszusammensetzung nach Anspruch 1, wobei das Polystyrolharz mit hohem Molekulargewicht ein lineares Polystyrolharz umfaßt.

12. Polymermischungszusammensetzung nach Anspruch 11, wobei das Polystyrolharz mit hohem Molekulargewicht in einer Menge von wenigstens 3 Gew.-% enthalten ist.

13. Polymermischungszusammensetzung nach Anspruch 1, wobei das Polystyrolharz mit hohem Molekulargewicht aus Polystyrolhomopolymeren und solchen Polystyrolcopolymeren ausgewählt ist, die aus weniger als 10 Gew.-% eines Nicht-Styrolmonomers gebildet sind.

14. Polymermischungszusammensetzung nach Anspruch 1, wobei das hochschlagzähe Polystyrolharz ein elastomeres Schlagzähigkeitsmodifikationsmittel umfaßt.

15. Polymermischungszusammensetzung nach Anspruch 1, wobei das hochschlagzähe Polystyrolharz Polystyrol und ein Schlagzähigkeitsmodifikationsmittel in einem Gewichtsverhältnis von wenigstens 3:1 umfaßt.

16. Polymermischungszusammensetzung nach Anspruch 1, wobei das Flammverzögerungsmittel aus Triarylphosphaten und bromierten aromatischen Verbindungen ausgewählt ist.

**Revendications**

1. Composition de mélange de polymères, à performances d'inflammabilité améliorées, comprenant :
   a) une résine de poly(phénylène éther) ;
   b) une résine de polystyrène à haute résistance aux chocs ;
   c) un agent retardant l'inflammation ; et

d) une résine de polystyrène à masse moléculaire élevée, dont la masse moléculaire moyenne en poids $M_p$ est supérieure à environ 400000, cette résine de polystyrène à masse moléculaire élevée étant présente en une proportion telle que la composition de mélange subit avec succès l'essai d'inflammabilité UL 94 5V.

**2.** Composition de mélange de polymères, conforme à la revendication 1, dans laquelle la quantité de résine de polystyrène à masse moléculaire élevée est inférieure à la quantité de résine de polystyrène à haute résistance aux chocs.

**3.** Composition de mélange de polymères, conforme à la revendication 1, comprenant :
a) de 5 à 90 % en poids de résine de poly(phénylène éther) ;
b) de 5 à 90 % en poids de résine de polystyrène à haute résistance aux chocs ; et
c) de 0,1 à 30 % en poids d'agent retardant l'inflammation.

**4.** Composition de mélange de polymères, conforme à la revendication 3, qui contient de 1,8 à 10 % en poids de composant (d).

**5.** Composition de mélange de polymères, conforme à la revendication 4, qui contient de 3 à 8 % en poids de composant (d).

**6.** Composition de mélange de polymères, conforme à la revendication 5, comprenant :
a) de 25 à 70 % en poids de résine de poly(phénylène éther) ;
b) de 25 à 70 % en poids de résine de polystyrène à haute résistance aux chocs ;
c) de 1 à 20 % en poids d'agent retardant l'inflammation ; et
d) de 3 à 8 % en poids de résine de polystyrène à masse moléculaire élevée.

**7.** Composition de mélange de polymères, conforme à la revendication 1, dans laquelle la résine de polystyrène à masse moléculaire élevée possède une masse moléculaire moyenne en poids supérieure à 600000.

**8.** Composition de mélange de polymères, conforme à la revendication 1, dans laquelle la résine de polystyrène à masse moléculaire élevée comprend une résine de polystyrène ramifiée.

**9.** Composition de mélange de polymères, conforme à la revendication 8, dans laquelle la proportion de résine de polystyrène à masse moléculaire élevée vaut au moins 1 % en poids.

**10.** Composition de mélange de polymères, conforme à la revendication 9, dans laquelle la proportion de résine de polystyrène à masse moléculaire élevée ne vaut pas plus de 10 % en poids.

**11.** Composition de mélange de polymères, conforme à la revendication 1, dans laquelle la résine de polystyrène à masse moléculaire élevée comprend une résine de polystyrène linéaire.

**12.** Composition de mélange de polymères, conforme à la revendication 11, dans laquelle la proportion de résine de polystyrène à masse moléculaire élevée vaut au moins 3 % en poids.

**13.** Composition de mélange de polymères, conforme à la revendication 1, dans laquelle la résine de polystyrène à masse moléculaire élevée est choisie dans l'ensemble que constituent les homopolymères du styrène et les copolymères du styrène formés avec moins de 10 % en poids d'un autre (ou d'autres) monomère(s) que le styrène.

**14.** Composition de mélange de polymères, conforme à la revendication 1, dans laquelle la résine de polystyrène à haute résistance aux chocs comporte un élastomère modifiant la résistance aux chocs.

**15.** Composition de mélange de polymères, conforme à la revendication 1, dans laquelle la résine de polystyrène à haute résistance aux chocs comporte un polystyrène et un agent modifiant la résistance aux chocs, en un rapport pondéral valant au moins 3/1.

**16.** Composition de mélange de polymères, conforme à la revendication 1, dans laquelle l'agent retardant l'inflammation est choisi dans l'ensemble que constituent les phosphates de triaryle et les composés aromatiques bromés.